# EUROPEAN PATENT APPLICATION

(11) **EP 4 832 416 A1**
(43) Date of publication of application: **28.10.2026**
(21) Application number: 25172168.4
(22) Date of filing: 24.04.2025
(51) Int. Cl.: H04L 9/32, H04L 9/00

(54) **A STATELESS HASH-BASED SIGNATURE SCHEME USING A VERY DEEP HYPERTREE**

(71) Applicant: THALES DIS CPL USA, INC, Austin TX 78759 (US)
(72) Inventor: PATCHELL, JONATHAN, CARLETON PLACE, K7C 2H4 (CA)
(74) Representative: Grevin, Emmanuel

(57) **Abstract**

Provided is an HSM (100) and method thereof for a stateless Hash-Based Signature Scheme (HBSS) with redundancy protection against quantum computer attacks without needing to maintain an internal state related to signing a message (34), the method comprises generating a very deep hypertree (14) of hierarchically organized Merkle trees (10), expanding a tree level and height according to a stateless pseudo-random index (17), and generating a chain of signatures and authentication paths. A very deep hypertree (14) with 2 to the power 256 number of OTS keys can be used for signing messages (34). Other embodiments disclosed.

## Description

### TECHNICAL FIELD

The present invention relates generally to cryptographic software and hardware, and more particularly, to Hardware Security Modules (HSM) using Hash-Based Signature Schemes to provide protection against quantum computer attacks.

### BACKGROUND

With the potential threat of Cryptographically Relevant Quantum Computers becoming a reality, new cryptographic algorithms are required to mitigate the risk to current asymmetric digital signature algorithms such as RSA and ECDSA. Two such algorithms to generate a digital signature are stateful hash-based signature (HBSS) schemes: the Leighton-Micali Signature (LMS) system and the eXtended Merkle Signature Scheme (XMSS), along with their multi-tree variants, the Hierarchical Signature System (HSS) and multi-tree XMSS. SPHINCS+ (FIPS 205/SLH-DSA) is a stateless hash-based signature scheme which consists of a few-time signature (FTS) construction, namely Forest of Random Subsets (FORS) and a hypertree, which was designed to sign up to 2^64 messages with three security levels. FTS schemes are signature schemes that allow a key pair to produce a small number of signatures. A message can be signed more than once with one key, though signing multiple times will gradually weaken the security eventually allowing others to forge messages.

In some of these schemes a one-way hash function is used where a finite number of one-time signatures (OTS) are combined in a Merkle tree. For these schemes to remain secure however, a state must be maintained to ensure that each OTS key is only used to sign once, typically using an index or counter that increments after the use of a key. This becomes a challenge to enforce that each OTS key is used once while also having redundancy and a backup of the key material.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

One objective of the embodiments herein is to improve the redundancy mechanisms in one or more Hardware Security Modules (HSMs) to protect against failure associated with otherwise maintaining a stateful Hash-Based Signature Scheme. Here, instead of maintaining a state, the HSM generates a very deep hypertree to effectively provide a stateless Hash-Based Signature Scheme (HBSS) for signature generation and verification that can protect against attacks from quantum computers. The HSM and method of operation for stateless HBSS is suitable for use with quantum-resistant algorithms, such as XMSS-MT and LMS, whereby an index into OTS keys is randomly derived, instead of incremented, that preserves existing security of HBSS by way of a very large number of OTS keys.

In some embodiments, a Hardware Security Module (HSM) provides stateless Hash-Based Signature Scheme (HBSS) with improved redundancy protection against quantum computer attacks without needing to maintain an internal state related to signing a message. It generates a very deep hypertree (14) of hierarchically organized Merkle trees, and generates a signatory OTS key.

In some embodiments, expanding produces increasing levels of Merkle trees with increasing heights across branch rows starting from a bottom row of leaf nodes to a root node at the top of the hypertree. A very deep hypertree with 2 to the power 256 OTS keys can be used for signing messages. Other embodiments disclosed.

In some embodiments, the step of expanding both a tree level and a tree height accords with a format of the stateless pseudo-random index (17) that is a bit-field of N bits where N = D x H, by selecting D = number of levels of Merkle trees; and H = height of each Merkle tree, such that the very deep hypertree (14) produces 2 to the power of N number of OTS keys (23) at its bottom level for signing messages.

In some embodiments, the step of expanding produces increasing levels of Merkle trees with increasing heights across branch rows starting from a bottom row of leaf nodes to a root node at the top of the hypertree.

In some embodiments, the HSM generates a chain of signatures and authentication paths, called a multitree signature (24), using the OTS signature and authentication path from (B4). In some embodiments, D=32 levels of trees and each tree is a height of H=8 thereby producing a very large hypertree with 2^256 OTS keys for signing messages.

In some embodiments, the step of identifying a signatory and upper Merkle tree through said progressing upward to a top Merkle tree comprises: extracting a first portion of the stateless pseudo-random index (17) and identifying a tree level from the first portion; and extracting a second portion of the stateless pseudo-random index (17), and identifying a tree height from the second portion, thereby identifying an OTS key for signing the message and each root node of a Merkle tree for each level of the hypertree.

In some embodiments, the signatory OTS key and upper root node signing OTS key are both based on a Winternitz One-Time Signature (WOTS+) scheme with a Merkle tree structure.

In some embodiments, the HSM reduces a length of a signature of the signed message using a larger Winternitz value and increasing a height of each level of Merkle Trees to reduce a number of one-time signatures needed for signing.

In some embodiments, the stateless Hash-Based Signature Scheme (HBSS) is an eXtended Merkle Signature Scheme (XMSS) for security against both Classical and Quantum Computer attack.

In some embodiments, the stateless Hash-Based Signature Scheme (HBSS) is Leighton-Micali Signatures (LMS) for efficient signing and verification of multiple messages with a single public key at the root node of the hypertree (14).

In some embodiments, the step of generating the authentication path from the top Merkle tree of the hypertree (14) down to the signatory Merkle tree (71) at the bottom of the hypertree (14) for authenticating the signature in reverse direction of said progressing upward is based solely on the stateless pseudo-random index (17) and not requiring a saving or storing of any state information into the hypertree (14).

In some embodiments, the HSM performs operations for storing in part the secret seed in a partition of memory therein; and distributing parts of the secret seed across several other HSMs in a stateless fashion to back up private key material with a high level security.

In some embodiments, a method for the HSM is provided for a stateless Hash-Based Signature Scheme (HBSS) with improved redundancy protection against quantum computer attacks without needing to maintain an internal state related to signing a message, wherein the method generates a very deep hypertree (14) of hierarchically organized Merkle trees, and generates a signatory OTS key.

In some embodiments, the step of expanding both a tree level and a tree height accords with a format of the stateless pseudo-random index (17) that is a bit-field of N bits where N = D x H, by selecting D = number of levels of Merkle trees; and H = height of each Merkle tree, such that the very deep hypertree (14) produces 2^N OTS keys (23) at its bottom level for signing messages, where ^ is to the power.

In some embodiments, the method generates a chain of signatures and authentication paths, called a multitree signature (24), using the OTS signature and authentication path from (B4). In some embodiments, D=32 levels of trees and each tree is a height of H=8 thereby producing a very large hypertree with 2^256 OTS keys for signing messages.

In some embodiments the step of expanding produces increasing levels of Merkle trees with increasing heights across branch rows starting from a bottom row of leaf nodes to a root node at the top of the hypertree, wherein D=32 levels of trees and each tree is a height of H=8 thereby producing the very deep hypertree with 2^256 OTS keys for signing messages.

In some embodiments the step of identifying a signatory and upper Merkle tree through said progressing upward to a top Merkle tree comprises: extracting a first portion of the stateless pseudo-random index (17) and identifying a tree level from the first portion; and extracting a second portion of the stateless pseudo-random index (17), and identifying a tree height from the second portion, thereby identifying an OTS key for signing the message and each root node of a Merkle tree for each level of the very deep hypertree.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1A** depicts an exemplary Merkle tree suitable for use with a Hash-Based Signature Scheme (HBSS) in a Hardware Security Module (HSM) in accordance with embodiments;
**FIG. 1B** depicts a very deep hypertree comprising a plurality of Merkle trees suitable for use as a stateless HBSS in an HSM in accordance with embodiments;
**FIG. 2** depicts a HSM employing stateless HBSS by way of the hypertree for protection against quantum computer attacks in accordance with embodiments;
**FIG. 3** depicts a hypertree expansion with multiple levels and heights for stateless Hash-Based Signature Scheme in an HSM in accordance with embodiments; and
**FIG. 4** depicts exemplary components of a Hardware Security Module (HSM) in accordance with one embodiment.
Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Post-quantum cryptography (PQC) refers to cryptographic algorithms that are thought to be secure against a cryptanalytic attack by a quantum computer. By utilizing quantum-resistant algorithms, Hardware Security Modules (HSMs) can provide a layer of security that can protect against attacks from quantum computers. An HSM is a dedicated crypto processing unit specifically designed for the hardware protection of the cryptographic key lifecycle. HSMs are fully contained and complete solutions for cryptographic processing, key generation, and key storage. They act as trust anchors to protect the crypto infrastructure of security-conscious organizations by securely managing, processing, and storing cryptographic keys inside a hardened, tamper-resistant device. HSMs protect keys and are used by applications in on premise, virtual, and cloud environments. They are deployed and securely configured remotely in any of these environments.

An HSM configured for stateless hash-based signature schemes provided herein is considered to be resistant to attacks using both classical and quantum computers. Hash-based signatures are designed by combining one-time signatures to form a hash tree, and its security is based on the security assumptions of the underlying hash function, such as collision resistance. It is a type of digital signature algorithm utilizing a structure of a Merkle tree to create a public key from a set of one-time key pairs, allowing for multiple signatures with a single public key while still maintaining security based on the one-time nature of the underlying keys. It effectively leverages the hash function to verify the authenticity of a message without relying on traditional public key cryptography assumptions.

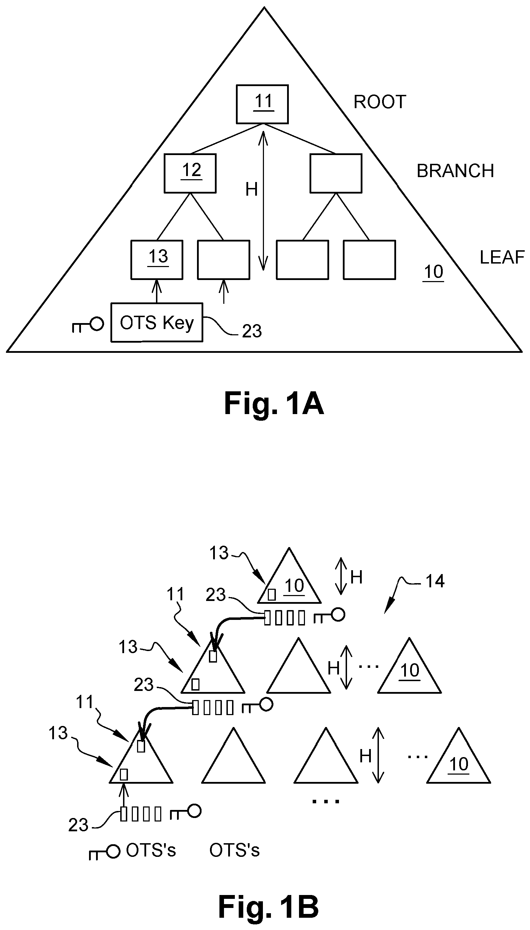

**FIG 1A** depicts an exemplary binary Merkle tree **10.** The binary Merkle tree **10** consists of a root node **11** at the top, with one or more rows of branch nodes **12** under the root growing down, and on the bottom is a row of leaf nodes **13.** The leaf nodes **13** are the bottom-most nodes in the tree each represent a hash of a One Time Signature (OTS) secret key **23.** Every node (**12, 11**) above the leaf nodes **13** is a hash of the concatenation of the two child nodes below it. In this manner, every node (e.g.,**11, 12, 13**) of the Merkle Tree is labelled with the cryptographic hash of a data block, which is either, for example, the OTS key **23** on the leaf row at the bottom, or the hash of two concatenated child leaf nodes **13** on branch nodes in the middle of the tree **10.** In a Merkle signature scheme the root node of the Merkle tree becomes the public key, and the set of all One-Time Signature (OTS) secret keys becomes the secret keys used for signing. For hash-based OTS, the secret keys consist of multiple random byte arrays. A fact of Merkle trees is that the number of leaves is always 2ⁿ, where the value "n" is a whole number.

The number of all total rows below the root node is the height of the tree. In this tree **10,** the height is 2 and hence the number of leaf nodes is 2^2 = 4; where x^Y means X raised to the power of Y. In a tree with three levels below the root node, the number of leaf nodes would be 2^3 = 8. Every leaf node **13** is labelled with the cryptographic hash of a data block. That data block is either the combination of two nodes below it for a binary Merkle tree, or an OTS key if at the bottom level. That is, every node that is not a leaf is labelled with the cryptographic hash of the combined labels of its two child nodes. The root node **11** of the Merkle tree **10** becomes the public key for that tree. Hash-Based Signatures use hash functions such as SHA 256 to provide a signature scheme. The security is derived from the security of hash functions. In a very large Merkle tree, the number of leaf nodes **13** may number in the hundreds of millions, and grows exponentially as the height increases.

**FIG 1B** depicts an exemplary multitree variant or hypertree **14** where there are multiple levels of Merkle trees **10.** The hypertree **14** is a hierarchical tree structure with multiple trees, and numerous OTS key **23** under each leaf row of every Merkle tree therein. The very bottom row of OTS keys of the hyper tree **14** are used for efficient signing of many messages without exhausting availability of these OTS secret keys. In contrast, the OTS keys along the middle interior of the hyptertree **14** are used to sign the root nodes of Merkle trees underneath the respective Merkle tree. One property of hypertrees **14** is that the value of the root node **11** of a Merkle tree **10** in a hypertree only depends on the leaf nodes of that Merkle tree. Accordingly, in the hypertree **14,** each of the leaf nodes **13** can generate their own Merkle tree **10.** To this point, the OTS key **23** of a higher level tree signs the root node **11** of a lower level tree below, thereby enabling a "chain of trust" for verification as denoted by the arrows from **23** to **11** at each tree level. Accordingly, each Merkle tree **10** in the hypertree **14** has OTS keys at the bottom of its respective tree. In some embodiments the hypertree **14** is based on eXtended Merkle Signature Scheme - Multi Tree (XMSS-MT) where each layer of trees signs the root nodes of the layer below, essentially allowing for a large number of signatures to be generated using a single public without incurring the exponential cost of using a single tree, making it a highly efficient post-quantum signature scheme.

Here, the OTS keys **23** of leaf nodes **13** from one tree **10** in the middle interior of the hypertree **14** sign the root node **11** of the tree below for each level of the hypertree **14.** The leaf nodes **13** of each tree **10** are each considered the hash of the One Time Signing (OTS) secret key used to sign the root **11** of the tree below, for example, by way of an HSM described ahead. In contrast, the leaf nodes **13** of the very bottom row of the hypertree **14** are each a hash of an OTS key **23** used for signing messages. Although the OTS secret keys **23** number in the hundreds of millions, this bottom row of leaf nodes constitutes a finite number of OTS keys that can only be used once. The other OTS keys **23** in the middle interior are used to sign the root node of the tree below. The XMSS-MT scheme is suitable for scenarios where a high volume of signatures are needed while maintaining security, such as signing firmware updates or code where strict key management is necessary, for example, with an HSM.

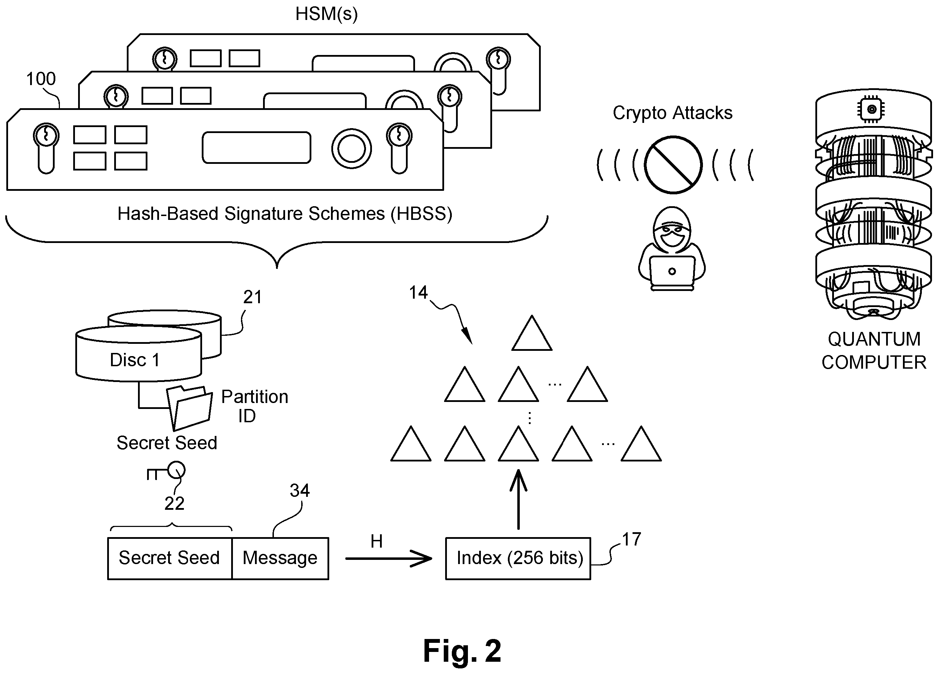

Referring to **FIG. 2** a Hardware Security Module (HSM) **100,** for example, amongst a group of HSMs, is configured to employ a stateless Hash-Based Signature Scheme (HBSS) with improved redundancy protection against quantum computer attacks without needing to maintain an internal state related to signing a message. The HSM **100** comprises one or more processors and memory coupled to the one or more processors, wherein the memory includes one or more partitions and computer instructions which when executed by the one or more processors causes the one or more processors to perform the operations described ahead.

The HSM is capable of generating a stateless LMS or XMSS hypertree **14** that allows for signing messages without needing to maintain any internal state related to the signing process, where each level of the hypertree signs the layer below it, allowing for independent signature generation. The HSM **100** generates each signature independently from the previous ones, while leveraging the efficient structure of the hypertree **14** to manage key material and verification paths. With this approach, there is no internal state to maintain with the key, and the key is stateless. This avoids the problems that the stateful algorithms have. Keys with this algorithm can safely be cloned and backed up or restored and can practically sign as many messages as desired.

To this point, the HSM **100** also stores in whole, or in part, a secret seed **22** that it uses to hash (H) messages **34** for purposes of producing a stateless pseudo-random index **17** into the large number of OTS keys of a very deep hypertree **14** and using this index (OTS key) to sign the message. The stateless pseudo-random index **17** into these OTS keys of the hypertree **14** is selected randomly or is pseudo-randomly derived by hashing the secret value **22** concatenated with the message **34.** Then the signature is produced for that stateless pseudo-random index **17** in accordance with usual XMSS-MT or HSS algorithms. Since there is such an enormous number of keys, there is a negligible chance of the HSM **100** using the same key twice. The one or more HSMs **100** can also together provide storage of the secret seed **22,** and private keys as explained ahead.

Notably, the HSM **100** provides stateless Hash-Based Signature Scheme using a very deep hypertree **14** for data and message signing. The HSM computes the nodes in each Merkle tree at each level of the hypertree **14** as needed during signing. In some arrangements, as shown here, the corresponding secret seed **22** is stored within the HSM **100.** As one example, it can be stored in a partition of memory, for example, a non-volatile hard disc **21.** This is because it is difficult to maintain copies of generic key material and still enforce that each OTS key is used only once, especially when copies of the key are distributed amongst one or more HSMs. Consider as an example, if the HSM generates a secret seed **22** and then makes a backup of that seed for redundancy, and then proceeds to use that seed to generated a stateless pseudo-random index **17** to sign several messages **34.** If the HSM restored the backup of that seed onto another HSM, both HSMs would improbably end up using the same index and thus the same OTS keys to sign messages due to the vast number of OTS keys in the generated hypertree. Accordingly, providing redundancy by way of the current approaches, such as a key store backup for the secret seed **22** that is used for stateless HBSS is suitable for use amongst one or more HSMs to protect against failure in its current form. The storing of this secret seed **22** across multiple HMSs also ensures a generated OTS key is used only once in accordance with the security rule.

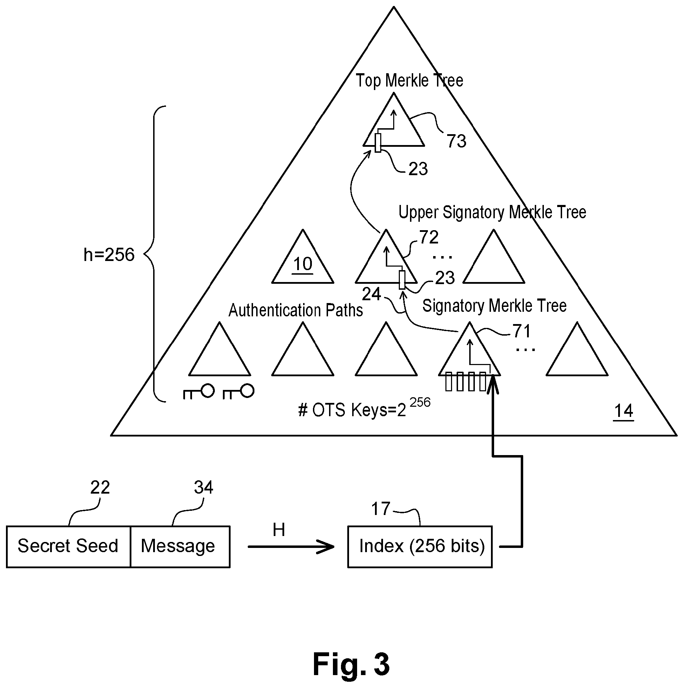

FIG. **3** illustrates a forest of Merkle trees scenario for message signing in conjunction with a verification of that signing by way of a chain of signatures and authentication paths, called a multitree signature **24.** Here, the HSM **100** first generates a single hypertree **14** of hierarchically organized Merkle trees, wherein each Merkle tree **10** consists of a root node **11,** one or more levels of branch nodes **12** and a level of leaf nodes **13.** It then expands both a tree level and a tree height according to a format of a stateless pseudo-random index **17;** the trees are originally empty. It does this for each level of the one root node, the one or more levels of branch nodes and the level of leaf nodes.

The HSM pseudo-randomly derives the stateless pseudo-random index **17** by hashing the secret seed **22** with the message **34.** This stateless pseudo-random index **17** effectively functions to select the bottom level Merkle tree and OTS key to use to sign the message along with the OTS keys and Merkle trees in the upper levels. The signature is produced for that index. In this example, the index is effectively a random 256-bit value. The step of pseudo-randomly generating the pseudo-random stateless pseudo-random index 17 comprises (A1) concatenating the secret seed **22** with the message **34** to produce a concatenated value, and (A2) hashing the concatenated value to produce the stateless pseudo-random index **17.**

As an example, the step of expanding both a tree level and a tree height accords with a format of the stateless pseudo-random index **17** that is a bit-field of N bits where N = D x H, by selecting the D and H parameters, wherein D = number of levels of Merkle trees, and H = height of each Merkle tree, such that the hypertree **14** produces 2^N OTS keys **23** at the bottom level of the hypertree for signing messages. This expansion allows it to hold a very large number of OTS keys. For instance, it may create a hypertree with 32 levels of trees of height 8 resulting in 2^256 OTS keys at the bottom level of the leaf nodes; effectively 2^248 Merkle trees each with 2^8 OTS keys.

In other embodiments the full height of the multi-tree can be reduced (such as 192 or 128) to have smaller signatures at the expense of decreasing the security. It can also be increased to have higher security such as 512 bits. The number of OTS keys at the bottom level would match the size of the index. This is shown in **FIG 1B****,** where the full height increases with the number of levels of Merkle trees. The total number of bottom level OTS keys is the number of OTS keys in each level (Merkle tree) to the power of the number of levels. Since there is such an enormous number of OTS keys and the index is selected pseudo-randomly, it is virtually impossible to use the same OTS key twice.

In this manner, for signing the message **34,** the HSM starts at the bottom of the hypertree **14** and then works all the way up to the top root node by way of the stateless pseudo-random index **17** at the very bottom. The HSM pseudo-randomly generates OTS keys as leaf nodes, where the leaves of each tree are the hash values of the OTS key. As mentioned above, the HSM **100** then populates certain Merkle trees going upward using OTS keys at each level according to the stateless pseudo-random index **17** for signing root nodes of Merkle trees in the middle interior. All of the private values for the OTS keys are generated pseudo-randomly and are generated as needed.

For instance, the step of generating a signatory OTS key comprises (B1) identifying a signatory Merkle tree **71** on a bottom row of the hyper tree according to the stateless pseudo-random index **17,** (B2) populating leaf nodes of said signatory Merkle tree **71** by hashing pseudo-randomly generated OTS keys **13,** produce the branch nodes **12** and the root node **11** by hashing pairs of nodes to build the Merkle tree upwards starting with the leaf nodes **13;** (B3) selecting the signatory OTS key **23** from the leaf nodes according to the stateless pseudo-random index **17;** and (B4) signing the hash of the message with the signatory OTS key to produce a signed message having an OTS signature and producing an authentication path from the required nodes of the Merkle tree.

The step of generating a multitree signature **24** comprises of using the OTS signature and authentication path from (B4); (C1) identifying an upper Merkle tree **72** according to the stateless pseudo-random index **17;** (C2) populating leaf nodes of said upper Merkle tree **72** by hashing the pseudo-randomly generated OTS keys produce the branch nodes **12** and the root node **11** by hashing pairs of nodes to build the Merkle tree upwards starting with the leaf nodes **13;** (C3) selecting assigning OTS key from said upper Merkle tree **72** according to the stateless pseudo-random index **17;** (C4) signing a root node of the signatory Merkle tree **71** with the signing OTS key; determine the authentication path using the required nodes of the Merkle tree; (C5) repeating the steps C1 to C4 for each level of Merkle trees in the hypertree whilst progressing upward to a top Merkle tree **73,** wherein the signatory Merkle tree recursively becomes the upper Merkle tree from the previous step and the new upper Merkle tree becomes the Merkle tree in the level above according to the stateless pseudo-random index **14** progressing upward along the hypertree **14;** and (C6) generating the multitree signature of the message, combining all OTS signatures and authentication paths.

With this approach, as the stateless pseudo-random index **17** is generated pseudo-randomly from the seed **22** and message **34,** and since all of the necessary OTS keys are dynamically pseudo-randomly generated, there is no internal state to maintain within the key, and the key is stateless. This avoids the problems that the stateful algorithms have. Keys with this algorithm can safely be cloned, backed up, or restored on the HSM **100** and can practically sign as many messages as desired. The length of the signature can be reduced by using a larger Winternitz value and by increasing the height of each level to reduce the number of one-time signatures needed. As an example, the HSM can increase the levels of Merkle trees with increasing heights across branch rows starting from a bottom row of leaf nodes to a root node at the top of the single hypertree.

As one example, the HSM **100** can generate a WOTS+ public key for each of the leaves of a Merkle tree. WOTS+ is applicable to both XMSS-MT and LMS. The WOTS+ scheme uses hash chains to sign multiple bits of random inputs, for example, starting with 34 32-byte random values as a private key. Each of these values is then hashed 256 times and the public key is made up of these 34 values. The message is then hashed (e.g. SHA256) and broken into single byte values whose bits are then used to select the value in the hash chain. In this approach, any octet in the message that is modified to be a lower value, will cause at least one byte in the checksum to increment, and thus will require the verifier to inverse a one-way hash function.

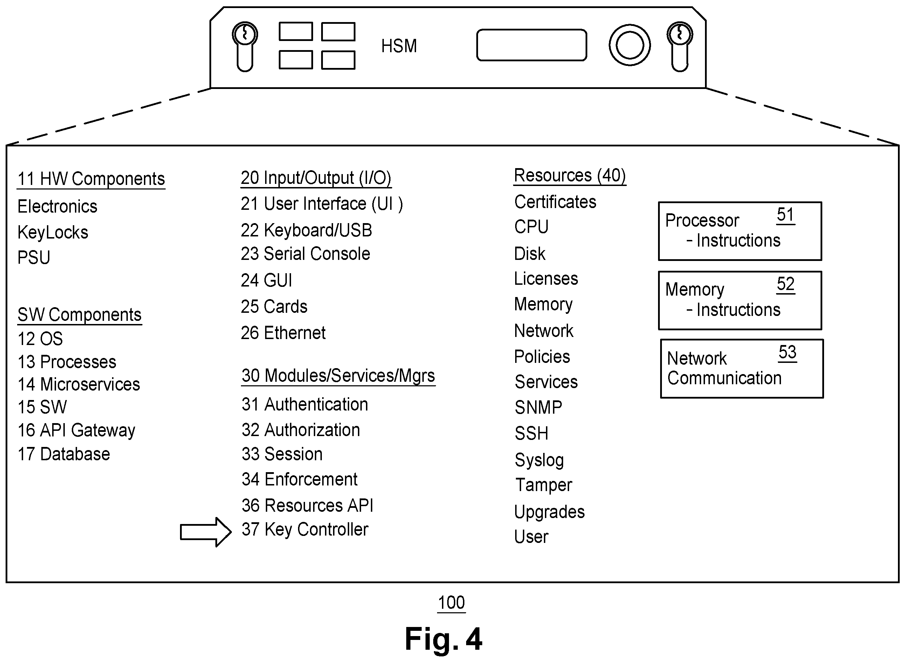

**FIG. 4** depicts exemplary components of the Hardware Server Module (HSM). The HSM **100** is a physical computing device that, among other capabilities, safeguards and manages digital keys, performs encryption and decryption functions for digital signatures, and provides for strong authentication and other cryptographic functions. As a security hardened unit, the HSM **100** records tamper evidence, such as visible signs of tampering or logging and alerting and provides for tamper responsiveness such as deleting keys upon tamper detection. The HSM **100** contains one or more secure crypto processor and sensor chips to prevent tampering and bus probing, or a combination of chips in a module that is protected by the tamper evident, tamper resistant, or tamper responsive packaging.

The HSM **100** is in effect a computer system comprising one or more processors **51** and memory **52** coupled to the one or more processors, wherein the memory **52** includes computer instructions which when executed by the one or more processors causes the one or more processors to perform the operations of the methods described herein. The HSM may be connected over the network to other machines via the network communication **53** device interface. In a networked deployment, the machine may operate in the capacity of a server or a client user machine in server-client user network environment, or as a peer machine in a peer-to-peer, or distributed, network environment.

Briefly, the Key Controller **37** uses the one or more processor **51** and memory **52** among other components, wherein the memory includes computer instructions which when executed by the processor causes the processor to perform the operational steps key generation key cloning, key controlling and key signing by way of the XMSS-MT and HSS hypertree implementations, and described above in view of **FIGS. 1A-1B** and **FIG. 3** and all interface and support routines. For example, the Key controller **37** ensures that only the secret seed **22** is used for HSM signing operations.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the machine-readable memory **52** is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding, or carrying a set of instructions for execution by the machine and that cause the machine to perform any one or more of the methodologies of the present disclosure.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

## Claims

1. A Hardware Security Module (HSM) (100) employing a stateless Hash-Based Signature Scheme (HBSS) with improved redundancy protection against quantum computer attacks without needing to maintain an internal state related to signing a message (34), the HSM comprising:
one or more processors (51) and memory (52) coupled to the one or more processors, wherein the memory includes one or more partitions and computer instructions which when executed by the one or more processors causes the one or more processors to perform the operations of:
generating a very deep hypertree (14) of hierarchically organized Merkle trees, wherein each Merkle tree (10) consists of a root node (11), one or more levels of branch nodes (12) and a level of leaf nodes (13);
expanding both a tree level and a tree height according to a format of a stateless pseudo-random index (17) for each level of the one root node, the one or more levels of branch nodes and the level of leaf nodes;
pseudo-randomly generating the stateless pseudo-random index (17) by:
A1) concatenating a secret seed (22) with the message (34) to produce a concatenated value; and
A2) hashing the concatenated value to produce the stateless pseudo-random index (17); and
generating a signatory OTS key by:
B1) identifying a signatory Merkle tree (71) on a bottom row of the very deep hyper tree according to the stateless pseudo-random index (17);
B2) populating leaf nodes of said signatory Merkle tree (71) by hashing pseudo-randomly generated OTS keys, producing the branch nodes (12) and the root node (11) by hashing pairs of nodes to build the Merkle tree upwards starting with the leaf nodes **13;**
B3) selecting the signatory OTS key (23) from the leaf nodes according to the stateless pseudo-random index (17); and
B4) signing a hash of the message with the signatory OTS key to produce a signed message having an OTS signature and producing an authentication path from the required nodes of the Merkle tree.

2. The HSM of claim 1, wherein the step of expanding both a tree level and a tree height accords with a format of the stateless pseudo-random index (17) that is a bit-field of N bits where
N = D x H, by selecting
D = number of levels of Merkle trees; and
H = height of each Merkle tree,
such that the very deep hypertree (14) produces 2^N OTS keys (23) at its bottom level for signing messages,
wherein the step of expanding produces increasing levels of Merkle trees with increasing heights across branch rows starting from a bottom row of leaf nodes to a root node at the top of the hypertree.

3. The HSM of claim 1, further comprising generating a chain of signatures and authentication paths, called a multitree signature (24), using the OTS signature and authentication path from (B4), by:
C1) identifying an upper Merkle tree (72) according to the stateless pseudo-random index (17);
C2) populating leaf nodes of said upper Merkle tree (72) by hashing the pseudo-randomly generated OTS keys , producing the branch nodes (12) and the root node (11) by hashing pairs of nodes to build the Merkle tree upwards starting with the leaf nodes **13;**
C3) selecting a signing OTS key from said upper Merkle tree (72) according to the stateless pseudo-random index (17);
C4) signing a root node of the signatory Merkle tree (71) with a signing OTS key, and determining the authentication path using required nodes of the Merkle tree;
C5) repeating the steps C1 to C4 for each level of Merkle trees in the hypertree whilst progressing upward to a top Merkle tree (73), wherein the signatory Merkle tree recursively becomes the upper Merkle tree from the previous step and a new upper Merkle tree becomes the Merkle tree in a level above according to the stateless index (14) progressing upward along the hypertree (14); and
C6) generating the multitree signature (24) of the message, combining all OTS signatures and authentication paths.

4. The HSM of claim 2, wherein D=32 levels of trees and each tree is a height of H=8 thereby producing a very large hypertree with 2^256 OTS keys for signing messages.

5. The HSM of claim 1, wherein the step of identifying a signatory and upper Merkle tree through said progressing upward to a top Merkle tree comprises:
extracting a first portion of the stateless pseudo-random index (17) and identifying a tree level from the first portion; and
extracting a second portion of the stateless pseudo-random index (17), and identifying a tree height from the second portion, thereby
identifying an OTS key for signing the message and each root node of a Merkle tree for each level of the hypertree.

6. The HSM of claim 1, where the signatory OTS key and upper root node signing OTS key are both based on a Winternitz One-Time Signature (WOTS+) scheme with a Merkle tree structure.

7. The HSM of claim 6, wherein the HSM reduces a length of a signature of the signed message using a larger Winternitz value and increasing a height of each level of Merkle Trees to reduce a number of one-time signatures needed for signing.

8. The HSM of claim 1, wherein the stateless Hash-Based Signature Scheme (HBSS) is an eXtended Merkle Signature Scheme (XMSS) for security against both Classical and Quantum Computer attack

9. The HSM of claim 1, wherein the stateless Hash-Based Signature Scheme (HBSS) is Leighton-Micali Signatures (LMS) for efficient signing and verification of multiple messages with a single public key at the root node of the hypertree (14).

10. The HSM of claim 1, wherein the step of generating the authentication path from the top Merkle tree of the hypertree (14) down to the signatory Merkle tree (71) at the bottom of the hypertree (14) for authenticating the signature in reverse direction of said progressing upward is based solely on the stateless pseudo-random index (17) and not requiring a saving or storing of any state information into the hypertree (14).

11. The HSM of claim 1, performs operations for
storing in part the secret seed in a partition of memory therein; and
distributing parts of the secret seed across several other HSMs in a stateless fashion to back up private key material with a high level security.

12. A method for a Hardware Security Module (HSM) employing a stateless Hash-Based Signature Scheme (HBSS) with improved redundancy protection against quantum computer attacks without needing to maintain an internal state related to signing a message (34), the method comprising steps for:
generating a very deep hypertree (14) of hierarchically organized Merkle trees, wherein each Merkle tree (10) consists of a root node (11), one or more levels of branch nodes (12) and a level of leaf nodes (13);
expanding both a tree level and a tree height according to a format of a stateless pseudo-random index (17) for each level of the one root node, the one or more levels of branch nodes and the level of leaf nodes;
pseudo-randomly generating the stateless pseudo-random index (17) by:
A1) concatenating a secret seed (22) with the message (34) to produce a concatenated value; and
A2) hashing the concatenated value to produce the stateless pseudo-random index (17); and
generating a signatory OTS key by:
B1) identifying a signatory Merkle tree (71) on a bottom row of the very deep hyper tree according to the stateless pseudo-random index (17);
B2) populating leaf nodes of said signatory Merkle tree (71) by hashing pseudo-randomly generated OTS keys , producing the branch nodes (12) and the root node (11) by hashing pairs of nodes to build the Merkle tree upwards starting with the leaf nodes **13;**
B3) selecting the signatory OTS key (23) from the leaf nodes according to the stateless pseudo-random index (17); and
B4) signing a hash of the message with the signatory OTS key to produce a signed message having an OTS signature and producing an authentication path from the required nodes of the Merkle tree.

13. The method of claim 12, wherein the step of expanding both a tree level and a tree height accords with a format of the stateless pseudo-random index (17) that is a bit-field of N bits where
N = D x H, by selecting
D = number of levels of Merkle trees; and
H = height of each Merkle tree,
such that the very deep hypertree (14) produces 2^N OTS keys (23) at its bottom level for signing messages,
wherein the step of expanding produces increasing levels of Merkle trees with increasing heights across branch rows starting from a bottom row of leaf nodes to a root node at the top of the hypertree,
wherein D=32 levels of trees and each tree is a height of H=8 thereby producing the very deep hypertree with 2^256 OTS keys for signing messages.

14. The method of claim 12, further comprising: generating a chain of signatures and authentication paths, called a multitree signature (24), using the OTS signature and authentication path from (B4), by:
C1) identifying an upper Merkle tree (72) according to the stateless pseudo-random index (17);
C2) populating leaf nodes of said upper Merkle tree (72) by hashing the pseudo-randomly generated OTS keys, producing the branch nodes (12) and the root node (11) by hashing pairs of nodes to build the Merkle tree upwards starting with the leaf nodes **13;**
C3) selecting a signing OTS key from said upper Merkle tree (72) according to the stateless pseudo-random index (17);
C4) signing a root node of the signatory Merkle tree (71) with a signing OTS key, and determining the authentication path using required nodes of the Merkle tree;
C5) repeating the steps C1 to C4 for each level of Merkle trees in the hypertree whilst progressing upward to a top Merkle tree (73), wherein the signatory Merkle tree recursively becomes the upper Merkle tree from the previous step and a new upper Merkle tree becomes the Merkle tree in a level above according to the stateless index (14) progressing upward along the hypertree (14); and
C6) generating the multitree signature (24) of the message, combining all OTS signatures and authentication paths.

15. The method of claim 12, wherein the step of identifying a signatory and upper Merkle tree through said progressing upward to a top Merkle tree comprises:
extracting a first portion of the stateless pseudo-random index (17) and identifying a tree level from the first portion; and
extracting a second portion of the stateless pseudo-random index (17), and identifying a tree height from the second portion, thereby
identifying an OTS key for signing the message and each root node of a Merkle tree for each level of the very deep hypertree.
